# EUROPEAN PATENT SPECIFICATION

(11) **EP 2 366 608 B1**
(45) Date of publication and mention of the grant of the patent: **23.07.2014**
(21) Application number: 10425080.8
(22) Date of filing: 19.03.2010
(51) Int. Cl.: B62D 33/06, B62D 33/10

(54) **Device for allowing the access to the part of a vehicle under the driver's cabin, by means of forward longitudinal sliding of said cabin, especially for industrial or commercial or specialty vehicle**
Vorrichtung für Zugang zu Teil unter der Fahrerkabine eines Fahrzeugs durch das längslaufende Vorwärtsschieben der besagten Kabine, insbesondere von Industrie- oder Spezialfahrzeugen
Dispositif pour permettre l'accès à la partie du véhicule sous la cabine du conducteur au moyen du coulissement longitudinal vers l'avant de ladite cabine, en particulier pour un véhicule industriel, commercial ou de spécialité

(43) Date of publication of application: 21.09.2011
(73) Proprietor: Iveco S.p.A., 10156 Torino (IT)
(72) Inventor: Malvano, Massimo, 10126 Torino (IT)
(74) Representative: Borsano, Corrado

(56) References cited:
- EP-A1- 2 221 222
- DE-A1- 19 927 375
- DE-A1- 19 943 539
- DE-A1-102004 027 202
- FR-A1- 2 904 596
- US-A- 4 262 958
- US-A- 5 327 988

## Description

### Application field of the invention

The present invention refers to a device for allowing the access to the part of a vehicle under the driver's cabin, by means of forward longitudinal sliding of said cabin, especially for industrial or commercial or specialty vehicle.

### Description of the prior art

In the field of commercial or industrial transport or of specialty vehicles, it is known in the art to use vehicles whose driver's cabin is placed over the engine compartment and is mounted so that it can be tilted, generally in a forward direction around a horizontal axis or pivot that is parallel to the forecarriage axle, in order to allow the access to the engine, during the maintenance operations with stationary vehicle.

At present, the controlled tilting of the driver's cabin is performed by means of hydraulic cylinders, which are usually fixed to side points of the bottom of the driver's cabin, and, at the opposite end, to the vehicle frame, in order to push the cabin tilting by rotating it up to a predetermined limit angle of elevation which corresponds to the maximum allowed tilting. The cylinders may be manually operated or, preferably, they may be operated by means of an appropriate electric motor.

The tilting of the cabin, however, does not allow an optimal access to the part of the vehicle under the driver's cabin itself, and above all it is not optimal for the vertical translation operations in order to remove bulky parts, such as the engine unit.

Moreover the tilting of the cabin generates problems of unstable equilibrium for objects contained in the cabin, since the open position is skew.

Moreover, the mechanical components allowing the tilting are expensive and heavy, and may cause structural twists of the cabin, especially if using a cylinder on only one side of the cabin.

A slidable cabin is known from FR 2904596.

### Summary of the invention

Therefore the aim of the present invention is to provide a device for allowing the access to the part of a vehicle under the driver's cabin, especially for industrial or commercial or specialty vehicles, suitable for overcoming all the drawbacks mentioned above.

The basic idea of the present invention is to actuate a forward longitudinal sliding movement of the cabin, in order to allow the access to the underlying part of the vehicle.

It is a particular object of the present invention a device for allowing the access to the part of a vehicle under the driver's cabin, by means of forward longitudinal sliding of said cabin, especially for industrial or commercial or special-purpose vehicle, as described in the claims, that are an integral part of the present description.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figure 1 shows a cross section according to an axonometric view of a part of the cabin's floor with some of the components of the device that is object of the present invention;

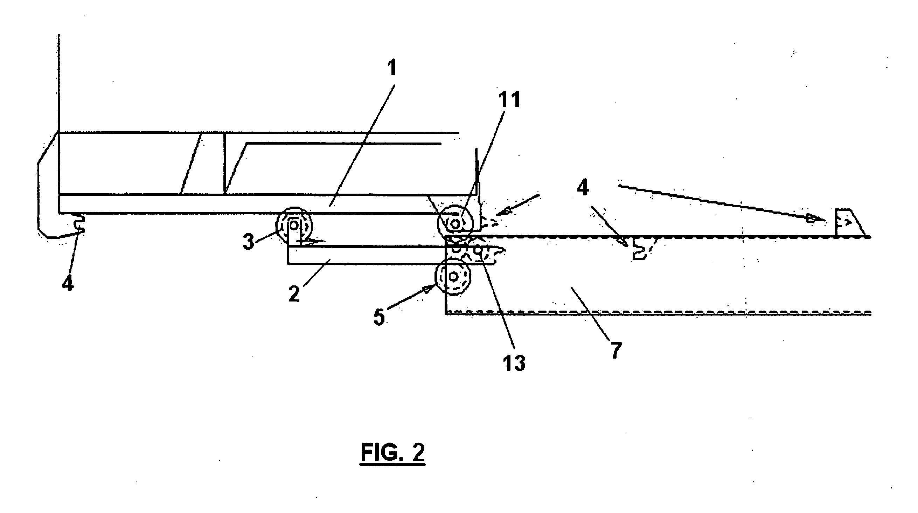

figure 2 shows a side section view of a part of the floor of the cabin with some of the components of the device that is object of the present invention, with the cabin in a completely forward slid condition.

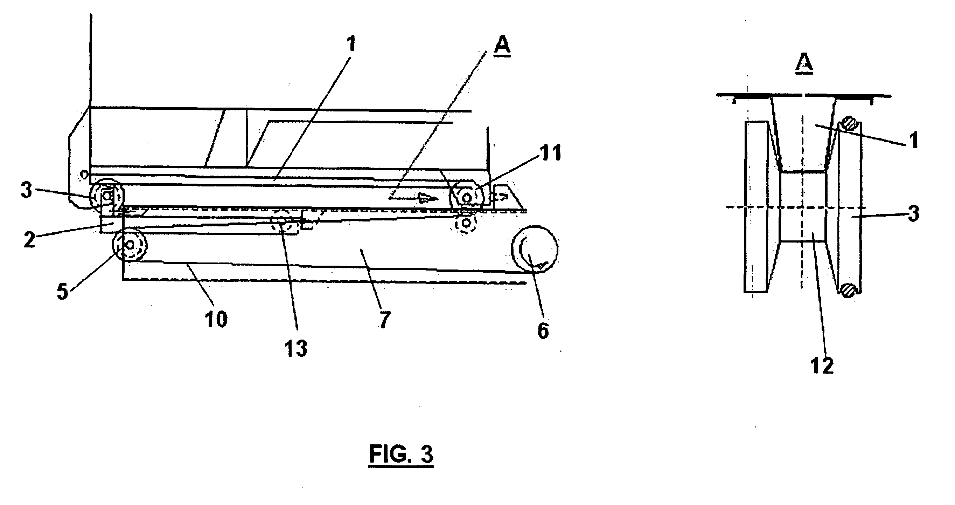

figure 3 shows a side section view of a part of the cabin's floor with some of the components of the device that is object of the present invention, with the cabin at rest in a completely rear condition and the vehicle in moving conditions, the figure having at one side an enlarged view according to the view A of a detail.

In the drawings the same reference numbers and letters identify the same elements or components.

### Detailed description of preferred embodiments of the invention

With reference to the attached figures, the forward longitudinal sliding of the cabin is actuated by means of telescopic guides applied under the cabin's floor, being fixed to the side members of the vehicle's frame. In particular pairs of telescopic guides are used in longitudinally symmetric parts of the cabin's floor.

The cabin's floor has flat parts 8 over the guides, and a folded central part 9 which forms the hood of the engine compartment.

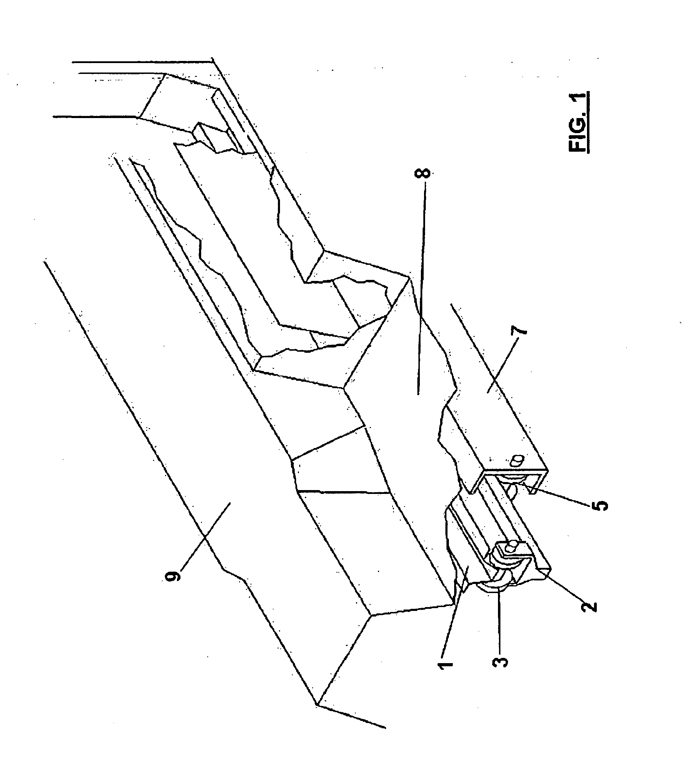

At the lower sides of the two symmetric flat parts 8 of the floor (fig. 1 shows just one of them) the respective side members of the cabin's floor 1 are fixed, as telescopic guides, and they have a constant and straight-line section being shaped as an overturned omega.

The lower part of the cabin has a box-type structure, formed by the flat parts, the hood and the side members, which strengthen the structure by means of the different foldings. Respective sliding guides 2, having a constant and straight-line section shaped as an overturned omega, are housed within the side members 7 of the vehicle's frame. Crushing rolls 3 are present in the guides 2 on which the side member 1 slides.

Further crushing rolls 5 are integral with the side member 1 and allow the longitudinal sliding of the sliding guide 2. They also form a guide for both the upward and downward vertical forces.

The rolls have a middle groove 12 in which the shaped profile of the guide may slide, and which provides for the side control of the side member of the cabin's floor 1 with respect to the side member of the vehicle's frame 7. Further rolls may be present 11, 13 in order to facilitate the sliding of the parts.

Centering devices 4 block the cabin and the sliding guide when the vehicle is in moving conditions.

The aforementioned blocking system guarantees that, when moving, the stresses generated by the ground are transmitted to the cabin by means of structurally solid areas. It is also possible to add elastic elements as a cabin's suspension.

The crushing rolls 5 allow the guide 2 to slide along all its length. The overall sliding of the cabin is equal to about two times the length of the guide 2.

The sliding may be manually activated. It is also possible to realize the cabin's sliding by means of a hydraulic, pneumatic, mechanical-electric winch 6, which transmits the forces by means of a cable 10. The cable 10 may slide in further grooves of the crushing rolls. As an alternative, the sliding of the cabin may be actuated by a device formed by worm screws.

It is evident that the dimensions of the components of the system must take into account the bending moment generated by the cabin when it is open.

It will be apparent to the person skilled in the art that other alternative and equivalent embodiments of the invention can be conceived and reduced to practice without departing from the scope of the invention.

The advantages deriving from the use of this invention are evident.

In particular moving the cabin by translation allow an optimal access to the part of the vehicle under the driver's cabin itself, above all for the vertical translation operations in order to remove bulky parts, such as the engine unit.

Moreover it solves the problems of unstable equilibrium for the objects contained in the cabin, caused by the skew open position in the case of the cabin tilting.

The solution according to the present invention allows a saving on the cost of the components with respect to the tilting solution.

From the description set forth above it will be possible for the person skilled in the art to embody the invention with no need of describing further construction details.

## Claims

1. Device for allowing the access to the part of a vehicle under the driver's cabin, especially for industrial or commercial or special-purpose vehicle, comprising means for actuating a forward longitudinal sliding movement of the cabin, which respect to the face of the vehicle with side members (7) **characterised in that** said means for actuating the forward longitudinal sliding movement of the cabin comprise:
- telescopic guides (1) applied under the cabin's floor, fixed to the cabin's floor suitable for sliding;
- sliding guides (2) having a constant and straigth line section shaped as an overturned omega and are housed within the side members (7) of the frame of the vehicle;
- crush rolls (3) present in the sliding guides (2) on which the telescopic guides (1) slides.

2. Device according to claim 1, wherein said telescopic guides (1) comprise pairs of telescopic guides (1) in longitudinally symmetric parts of the cabin's floor.

3. Device according to claim 2, wherein said telescopic guides (1) have a constant and straight-line section shaped as an overturned omega, and said rolls (3) have a middle groove wherein the sliding of the guides is actuated.

4. Device according to any of the previous claims, further comprising centering devices suitable for blocking the cabin and the sliding guides (2) when the vehicle is in moving conditions.

## Patentansprüche

1. Vorrichtung, um den Zugriff auf das Teil eines Fahrzeugs unter der Fahrerkabine zu ermöglichen, insbesondere für industrielle oder kommerzielle oder Spezialfahrzeuge, mit einem Mittel zum Betätigen einer vorwärts gerichteten Längsgleitbewegung der Kabine in Bezug auf die Seitenfläche des Fahrzeugs mit Seitenelementen (7), **dadurch gekennzeichnet, dass** das Mittel zum Betätigen der vorwärts gerichteten Längsgleitbewegung der Kabine umfasst:
- Teleskopführungen (1), die unter dem Kabinenboden aufgebracht sind, an dem Kabinenboden befestigt sind und zum Gleiten geeignet sind;
- Gleitführungen (2) mit einem konstanten und geraden Linienabschnitt, der als ein umgedrehtes Omega geformt ist und die in den Seitenelementen (7) des Rahmens des Fahrzeugs untergebracht sind;
- Quetschwalzen (3), die in den Gleitführungen (2) vorhanden sind und an denen die Teleskopführungen (1) gleiten.

2. Vorrichtung nach Anspruch 1, wobei die Teleskopführungen (1) Paare von Teleskopführungen (1) in längssymmetrischen Teilen des Kabinenbodens umfassen.

3. Vorrichtung nach Anspruch 2, wobei die Teleskopführungen (1) einen konstanten und geradlinigen Abschnitt besitzen, der als ein umgedrehtes Omega geformt ist, und die Rollen (3) eine mittlere Nut aufweisen, in der das Gleiten der Führungen bewirkt wird.

4. Vorrichtung nach einem der vorhergehenden Ansprüche, ferner mit Zentriervorrichtungen, die zum Blockieren der Kabine und der Gleitführungen (2) geeignet sind, wenn sich das Fahrzeug in sich bewegenden Zuständen befindet.

## Revendications

1. Dispositif pour permettre l'accès à la partie d'un véhicule sous la cabine du conducteur, en particulier pour des véhicules industriels ou commerciaux ou à but spécial, comprenant des moyens pour actionner un mouvement de coulissement longitudinal vers l'avant de la cabine, relativement à la face du véhicule avec des éléments latéraux (7), **caractérisé en ce que** lesdits moyens pour actionner le mouvement de coulissement longitudinal vers l'avant de la cabine comprennent :
- des guidages télescopiques (1) appliqués sous le plancher de la cabine, fixés au plancher de la cabine, qui conviennent pour le coulissement ;
- des guides de coulissement ayant une section de ligne constante et droite configurée comme un oméga retourné et logés dans les éléments latéraux (7) du châssis du véhicule ;
- des cylindres d'écrasement (3) présents dans les guides de coulissement (2) sur lesquels les guides télescopiques coulissent.

2. Dispositif selon la revendication 1, où lesdits guidages télescopiques (1) comprennent des paires de guidages télescopiques (1) dans des parties longitudinalement symétriques du plancher de la cabine.

3. Dispositif selon la revendication 2, où lesdits guidages télescopiques (1) ont une section de ligne constante et droite configurée comme un oméga retourné, et lesdits cylindres (3) ont une rainure médiane dans laquelle le coulissement des guidages est actionné.

4. Dispositif selon l'une quelconque des revendications précédentes, comprenant en outre des dispositifs de centrage aptes à bloquer la cabine et les guides de coulissement (2) lorsque le véhicule se trouve dans des conditions de mouvement.
